# EUROPÄISCHE PATENTSCHRIFT

(11) **EP 3 102 067 B1**
(45) Veröffentlichungstag und Bekanntmachung des Hinweises auf die Patenterteilung: **14.06.2023**
(21) Anmeldenummer: 15705229.1
(22) Anmeldetag: 05.02.2015
(51) Int. Cl.: A46B 9/02, A46D 3/00

(54) **INTERDENTALBÜRSTE ZUM REINIGEN VON ZAHNZWISCHENRÄUMEN UND/ODER ZAHNIMPLANTATEN**
INTERDENTAL BRUSH FOR CLEANING GAPS BETWEEN TEETH AND/OR DENTAL IMPLANTS
BROSSE À DENTS INTERDENTAIRE POUR LE NETTOYAGE DES ESPACES ENTRE LES DENTS ET/OU ENTRE DES IMPLANTS DENTAIRES

(30) Priorität: 06.02.2014 DE 102014001503; 06.02.2014 DE 102014001502
(43) Veröffentlichungstag der Anmeldung: 14.12.2016
(73) Patentinhaber: pheneo GmbH, 28359 Bremen (DE)
(72) Erfinder: ESSLER, Michael, 27478 Cuxhaven (DE); HABIBI-NAINI, Sasan, 28870 Fischerhude (DE)
(74) Vertreter: Tappe, Udo
(86) Internationale Anmeldenummer: PCT/EP2015/052447
(87) Internationale Veröffentlichungsnummer: WO 2015/118081

(56) Entgegenhaltungen:
- EP-A1- 2 204 140
- US-A1- 2010 146 724
- US-B1- 6 767 209

## Beschreibung

Die Erfindung betrifft eine Interdentalbürste zum Reinigen von Zahnzwischenräumen und/oder Zahnimplantaten, mit einem Bürstenkopf, der einen länglichen Borstenträger und eine Vielzahl von Borsten aufweist, wobei sich die Borsten ausgehend von dem Borstenträger radial nach außen erstrecken.

Eine derartige Interdentalbürste ist aus der US 2009/0235477 A1 bekannt. Bei dieser bekannten Interdentalbürste ist der Borstenträger als ein Metalldraht bzw. eine Metallseele ausgebildet. Ähnliche Interdentalbürsten zeigen auch die Druckschriften US 2010/0146724 A1 und US 6,767,209 B1.

Hierbei ist von Nachteil, dass der metallene Borstenträger bzw. die Metallseele zu Verletzungen des Zahnfleisches und/oder des Zahnschmelzes, beispielsweise durch Schnitte oder Punktionen führen kann. Des Weiteren besteht die Gefahr, dass Zahnimplantate aufgrund des metallenen Borstenträgers verkratzt werden. Verletzungen im Mundbereich führen zu dem Risiko einer Besiedelung mit Mikroorganismen bzw. Entzündungen, die beispielsweise bis zu einer Periimplantitis, einem Knochenabbau und/oder einem Zahnverlust, insbesondere mit der Folge eines Implantatverlustes, führen kann. Um diese Risiken zu minimieren, ist eine intensive Schulung des Patienten erforderlich, so dass dieser möglichst fachmännisch mit bekannten Interdentalbürste umgehen kann. Aus Zeit- und/oder Kostengründen wird eine derart intensive Schulung, beispielsweise in einer Zahnarztpraxis in der Regel jedoch nicht durchgeführt. Des Weiteren werden Interdentalbürsten oftmals mehrfach verwendet. Hierbei besteht die Gefahr einer Keimverschleppung, insbesondere aufgrund einer ausgeprägte Hohlräume aufweisenden Oberfläche bei üblichen Metallseelen. Darüber hinaus besteht das Risiko, dass eine Metallseele, insbesondere auch eine ummantelte Metallseele, aufgrund einer Ablage und/oder Reinigung in einer Lösung, insbesondere einer Chlorhexidin-Lösung, oxidiert und/oder rostet.

Des Weiteren ist aus der DE 10 2011 101 391 A1 ein interdentaler Zahnstocher bekannt. Dieser Zahnstocher wird als ein 2-Komponenten-Spritzgussteil hergestellt. Hierdurch ist der Herstellungsprozess aufwändig, was zu erhöhten Kosten führt. Darüber hinaus ist bei dem bekannten Zahnstocher von Nachteil, dass dieser seitlich abstehende Erhebungen nur in geringer Anzahl und in wenigen unterschiedlichen Ausrichtungen hat. Weiter ist nachteilig, dass der Reinigungsbereich in einem Zahnzwischenraum, insbesondere in einer Zahnhalsregion, durch die vorgegebene keilförmige Form des Zahnstochers beschränkt ist. Darüber hinaus erlaubt die Länge des Zahnstochers in der Regel keinen Einsatz aus dem zungenseitigen und/oder gaumenseitigen Bereich in Richtung der Wangenseite.

Die der Erfindung zugrunde liegende Aufgabe ist es, eine Interdentalbürste der eingangs genannten Art derart weiterzuentwickeln, dass eine Zahnzwischenraumreinigung und/oder eine Implantatreinigung erleichtert ist, insbesondere soll das Verletzungs- und/oder Beschädigungsrisiko bei der Verwendung einer Interdentalbürste reduziert werden.

Die der Erfindung zugrunde liegende Aufgabe wird durch eine Interdentalbürste der eingangs genannten Art gelöst, bei der der Bürstenkopf als ein 1-Komponenten-Spritzgussteil ausgebildet ist.

Hierbei ist von Vorteil, dass der gesamte Bürstenkopf und somit sowohl die Borsten als auch der Borstenträger in einem einzigen Herstellungsschritt aus einem Kunststoffmaterial herstellbar sind. Insbesondere die Herstellung des Borstenträgers aus einem spritzgussfähigen Kunststoffmaterial erleichtert die Herstellung eines elastischen und/oder flexiblen Borstenträgers und/oder Bürstenkopfes. Hierdurch kann die Gefahr einer Verletzung des Zahnfleisches und/oder des Zahnschmelzes sowie das Risiko einer Beschädigung von Zahnimplantaten erheblich reduziert werden. Zudem ist die Herstellung einer erfindungsgemäßen Interdentalbürste besonders zeit- und/oder kostengünstig realisierbar. Insbesondere ist der Bürstenkopf rotationssymmetrisch zur Längsachse bzw. Mittelachse des Borstenträgers ausgebildet. Somit kann der Bürstenkopf einen im Wesentlichen runden Querschnitt aufweisen. Aufgrund der Vermeidung einer Metallseele ist die erfindungsgemäße Interdentalbürste, insbesondere der Bürstenkopf, hygienischer und/oder, insbesondere aufgrund einer geeigneten Materialwahl, besser desinfizierbar und/oder gegebenenfalls sogar autoklavierbar. Hierdurch kann die Gefahr einer Keimverschleppung im Falle einer Mehrfachverwendung erheblich reduziert werden. Darüber hinaus ist das Risiko einer unerwünschten Wechselwirkung, insbesondere einer Oxidation, der Interdentalbürste bzw. des Bürstenkopfes bei einer Ablage und/oder Reinigung in einer Lösung, insbesondere einer Chlorhexidin-Lösung, erheblich reduziert, vorzugsweise vollständig verhindert.

Vorzugsweise besteht der Bürstenkopf mit dem Borstenträger und den Borsten aus einem einzigen zum Kunststoff-Spritzgussgießen oder Kunststoff-Spritzgießen geeigneten Kunststoffmaterial. Somit lässt sich der Bürstenkopf kostengünstig in einem einzigen Herstellungsschritt herstellen. Vorzugsweise sind der Bürstenkopf, der Borstenträger und/oder die Borsten elastisch und/oder flexibel ausgebildet. Hierdurch ist das Risiko einer Verletzung des Zahnfleisches und/oder des Zahnschmelzes und/oder einer Beschädigung von Zahnimplantaten erheblich reduziert. Zudem kann hierdurch der Reinigungsbereich in einem Zahnzwischenraum, insbesondere in einer Zahnhalsregion, optimiert und/oder vergrößert sein. Vorzugsweise ist die Steifigkeit der Borsten kleiner als die Steifigkeit des Borstenträgers. Insbesondere wird dies dadurch erreicht, dass die Materialstärke des Borstenträgers größer gewählt ist als die Materialstärke der Borsten. Der Borstenträger kann auch als Seele, insbesondere des Bürstenkopfes, bezeichnet werden.

Der Bürstenkopf kann, insbesondere wahlweise, von der Zungenseite oder der Wangenseite in den Zahnzwischenraum hinein, vorzugsweise mindestens teilweise durch den Zahnzwischenraum hindurch, geschoben werden. Aufgrund der elastischen und/oder flexiblen Eigenschaften des Bürstenkopfes, des Borstenträgers und/oder der Borsten kommt es in einem verengten mittleren Bereich des Zahnzwischenraumes zu einer Komprimierung des Bürstenkopfes. Beim Austreten des Bürstenkopfes aus der Verengung an der von der Einschubseite des Zahnzwischenraumes abgewandten Ausschubseite entfaltet sich der Bürstenkopf wieder. Hierdurch ist der gesamte Zahnzwischenraum, insbesondere sowohl auf der Zungenseite als auch auf der Wangenseite, reinigbar. Vorzugsweise wird die Interdentalbürste zum Reinigen des Zahnzwischenraumes in dem Zahnzwischenraum hin und her bewegt.

Nach einer weiteren Ausführungsform sind unmittelbar benachbarte Borsten mit einer Winkeldifferenz von weniger als 90° an dem Borstenträger angeordnet. Insbesondere bezieht sich die Winkeldifferenz auf unmittelbar benachbarte Borsten, die in einer Ebene quer und/oder rechtwinkelig zur Längsachse des Borstenträgers angeordnet sind. Die Borsten können in mehreren quer und/oder rechtwinkelig zur Längsachse des Borstenträgers angeordneten und in Längsrichtung des Borstenträgers voneinander beabstandeten Ebenen angeordnet sein. Insbesondere sind mindestens 15 oder mindestens 18 Ebenen vorgesehen. Vorzugsweise sind 25 bis 100 Ebenen, insbesondere 18 oder 50 Ebenen, vorgesehen. Die Borsten zweier in Längsrichtung des Borstenträgers unmittelbar aufeinander folgender Ebenen können um die halbe Winkeldifferenz zweier unmittelbar benachbarter Borsten in derselben Ebene versetzt zueinander angeordnet sein. Insbesondere beträgt die Winkeldifferenz zweier unmittelbar benachbarter Borsten weniger als 60°, vorzugsweise weniger als 45°, bevorzugt weniger als 30°. Besonders bevorzugt beträgt die Winkeldifferenz von unmittelbar benachbarten Borsten, insbesondere in einer Ebene quer und/oder rechtwinkelig zur Längsachse des Borstenträgers, zwischen 30° und 40°. Insbesondere beträgt die Winkeldifferenz genau 36° oder 72°. Somit ist eine hohe Dichte von sich radial ausgehend von dem Borstenträger nach außen erstreckenden Borsten realisierbar. Hierdurch ist die Reinigungswirkung erheblich verbessert.

Gemäß einer Weiterbildung weisen die Borsten eine Borstenlänge im Bereich von 1 mm bis 2,5 mm auf. Insbesondere beträgt die Borstenlänge 1 mm, 1,5 mm, 1,95 mm oder 2 mm. Vorzugsweise wird die Borstenlänge von einer gedachten Mittellinie bzw. Mittelachse des Borstenträgers aus gemessen bzw. bestimmt. Die Borsten können im Wesentlichen zylindrisch ausgebildet sein. Vorzugsweise verjüngen sich die Borsten von dem Borstenträger weg in Richtung einer Borstenspitze. Insbesondere sind die Borsten konisch ausgebildet. Insbesondere zum Reduzieren des Verletzungsrisikos kann die Borstenspitze abgerundet ausgebildet sein.

Die Borsten können einen kreisförmigen, halbkreisförmigen oder halbkreisartigen, insbesondere halbmondartigen, Querschnitt aufweisen. Insbesondere haben die Borsten jeweils einen im Querschnitt gebogenen und/oder halbkreisartigen Wandabschnitt und einen flächigen, vorzugsweise ebenen, Wandabschnitt. Somit können die Borsten als volle Borsten oder als in Längsrichtung geschnittene, halbe Borsten ausgebildet sein. Die Verwendung von halben Borsten kann bei Verwendung einer gleichartig ausgebildeten Basis eine Anordnung einer höheren Anzahl von Borsten ermöglichen als bei der Verwendung von vollen Borsten. Die im Querschnitt halbkreisartigen oder halbmondartigen Borsten können sich von dem Borstenträger weg in Richtung einer Borstenspitze verjüngen. Die flächigen und/oder ebenen Wandabschnitte der Borsten können parallel zueinander und/oder parallel zur Längsrichtung des Borstenträgers ausgerichtet sein. Insbesondere können die flächigen und/oder ebenen Wandabschnitte der Borsten, die in einer Ebene quer und/oder rechtwinklig zur Längsachse des Borstenträgers angeordnet sind, parallel zueinander ausgerichtet sein. Vorzugsweise sind die flächigen und/oder ebenen Wandabschnitte, insbesondere solche, die in der selben Ebene angeordnet sind, in die selbe Richtung ausgerichtet.

Vorzugsweise haben die Borsten einen maximalen Durchmesser im Bereich von 0,1 mm bis 0,25 mm. Insbesondere beträgt der maximale Durchmesser der Borsten 0,1 mm oder 0,2 mm. Der maximale Durchmesser der Borsten kann einem mit dem Borstenträger verbundenen Borstensockel zugeordnet sein. Hierbei ist der Borstensockel integraler Bestandteil der Borste. Insbesondere befindet sich der Borstensockel an einem von einer Borstenspitze abgewandten Ende der Borste. Insbesondere bei einer konisch ausgebildeten Borste ist der maximale Durchmesser der Borste in dem mit dem Borstenträger verbundenen Bereich des Borstensockels angeordnet.

Nach einer Weiterbildung hat der Borstenträger und/oder ein mit den Borsten bestückter Borstenbereich des Borstenträgers eine Länge im Bereich von 5 mm bis 35 mm. Vorzugsweise hat der Borstenträger und/oder ein mit den Borsten bestückter Borstenbereich des Borstenträgers eine Länge im Bereich von 10 mm bis 25 mm. Insbesondere hat Borstenträger und/oder der Borstenbereich eine Länge im Bereich von 12 mm bis 20 mm. Vorzugsweise beträgt die Länge des Borstenträgers und/oder des Borstenbereichs 15 mm, 16,4 mm oder 20 mm.

Der Borstenträger kann einen Durchmesser im Bereich von 0,5 mm bis 1,5 mm aufweisen. Insbesondere liegt der Durchmesser des Borstenträgers im Bereich von 0,7 mm bis 0,9 mm. Somit können der Borstenträger und/oder der Bürstenkopf problemlos in übliche Zahnzwischenräume eingeführt werden. Der längliche Borstenträger kann im Wesentlichen zylindrisch und/oder stabförmig ausgebildet sein. Vorzugsweise ist der Borstenträger konisch ausgebildet, wobei sich der Borstenträger, insbesondere ausgehend von dem Griffstück, in Richtung einer Spitze des Borstenträgers verjüngt. Insbesondere ist eine von dem Griffstück abgewandte Spitze des Borstenträgers abgerundet. Hierdurch ist das Einführen in den Zahnzwischenraum erleichtert und/oder die Gefahr einer Verletzung weiter reduziert. Die Spitze des Borstenträgers kann ebenfalls mit Borsten bestückt sein. Beispielsweise kann die Spitze des Borstenträgers kugelsegmentartig ausgebildet sein. Vorzugsweise erstrecken sich Borsten radial von der Fläche der kugelsegmentartigen Spitze des Borstenträgers nach außen weg. Insbesondere ist die Spitze des Borstenträgers als eine Halbkugel ausgebildet.

Insbesondere hat der Borstenträger einen maximalen Durchmesser im Bereich von 0,5 mm bis 2 mm, bevorzugt im Bereich von 0,6 mm bis 1,4 mm. Besonders bevorzugt hat der Borstenträger einen maximalen Durchmesser von 0,6 mm oder 1,4 mm. Der Bereich des Borstenträgers mit dem maximalen Durchmesser kann an dem Griffstück angeordnet sein. Vorzugsweise hat der Borstenträger einen minimalen Durchmesser im Bereich von 0,2 mm bis 1mm, bevorzugt im Bereich von 0,4 mm bis 0,9 mm. Besonders bevorzugt hat der Borstenträger einen minimalen Durchmesser von 0,4 mm oder 0,9 mm. Der minimale Durchmesser des Borstenträgers kann einem von dem Griff angewandten Ende des Borstenträgers und/oder einer Spitze des Borstenträgers zugeordnet sein.

Vorzugsweise liegt die Anzahl der Borsten an dem Borstenträger und/oder in dem Borstenbereich des Borstenträgers im Bereich von 50 bis 1.000 Borsten. Insbesondere liegt die Anzahl der Borsten im Bereich von 300 bis 840 Borsten. Besonders bevorzugt sind mindestens 90, 150 oder 180 Borsten vorgesehen. Vorzugsweise sind 90, 180 oder 500 Borsten an dem Borstenträger und/oder dem Borstenbereich des Borstenträgers vorgesehen. Somit sind eine Vielzahl von sehr dünnen und hochwertig ausgebildeten Borsten vorgesehen, wodurch die Reinigungswirkung der Interdentalbürste verbessert ist.

Gemäß einer Weiterbildung weist der Bürstenkopf ein Fließweg/Wanddicken-Verhältnis größer als 20 auf. Insbesondere ist das Fließweg/Wanddicken-Verhältnis für den Bürstenkopf größer als 30. Vorzugsweise liegt das Fließweg/Wanddicken-Verhältnis in einem Bereich von 30 bis 50. Insbesondere liegt das Fließweg/Wanddicken-Verhältnis im Bereich von 20 bis 30 oder im Bereich von 35 bis 45. Bevorzugt hat das Fließweg/Wanddicken-Verhältnis einen Wert von 38. Die Interdentalbürste mit dem Griffstück kann ein Fließweg/Wanddicken-Verhältnis im Bereich von 20 bis 50 und/oder im Bereich von 40 bis 60 aufweisen. Der Bürstenkopf, insbesondere die Interdentalbürste ohne Griffstück, kann ein Fließweg/Wanddicken-Verhältnis im Bereich von 20 bis 30, insbesondere von genau 25,2, oder im Bereich von 40 bis 50, insbesondere von genau 42,8, aufweisen. Das Fließweg/Wanddicken-Verhältnis setzt den Fließweg, den die Komponente bzw. der Kunststoff beim Spritzgussgießen bzw. Spritzgießen zurück legen muss, ins Verhältnis zur Wanddicke des herzustellenden Spritzgussteils. Je größer das Fließweg/Wanddicken-Verhältnis ist, desto dünnflüssiger muss der eingesetzte Werkstoff bzw. Kunststoff sein. Bei großen Fließweg/Wanddicken-Verhältnissen größer als 20 und/oder größer als 30 wird das Spritzgussteil vorzugsweise mit einem erhöhten Druck gespritzt. Vorzugsweise ergibt sich das Fließweg/Wanddicken-Verhältnis bei dem Bürstenkopf aus der Länge des Borstenträgers geteilt durch den Durchmesser des Borstenträgers addiert mit der Länge einer Borste geteilt durch den Durchmesser der Borste.

Vorzugsweise weist die Interdentalbürste ein Griffstück auf. Insbesondere ist das Griffstück mit dem Bürstenkopf verbunden. Das Griffstück kann als eine, insbesondere axiale, Verlängerung des Borstenträgers ausgebildet sein. Vorzugsweise ist der mit dem Griffstück verbundene Bürstenkopf als ein 1-Komponenten-Spritzgussteil oder als ein 2-Komponenten-Spritzgussteil ausgebildet. Bei einer 1-komponentigen Ausbildung der Interdentalbürste mit dem Bürstenkopf und dem Griffstück lassen sich besonders günstige Herstellungskosten und/oder kurze Herstellungszeiten realisieren. Alternativ ist denkbar, dass das Griffstück an einem von einer Spitze des Borstenträgers abgewandten Ende des Borstenträgers angespritzt wird. Vorzugsweise ist bei einem 2-Komponenten-Spritzgussteil, bestehend aus dem Bürstenkopf und dem Griffstück, das Griffstück aus einem anderen Kunststoffmaterial hergestellt als der Bürstenkopf. Hierdurch ist das Griffstück beispielsweise aus einem starren bzw. steifen Kunststoffmaterial herstellbar, wodurch die Griffigkeit verbessert ist. Der Bürstenkopf ist dagegen aus einem elastischen und/oder flexiblen Kunststoffmaterial herstellbar, wodurch die Reinigungswirkung verbessert und das Verletzungs- und/oder Beschädigungsrisiko reduziert ist. Der Bürstenkopf und das Griffstück können in einem vorgegebenen Winkel zueinander angeordnet sein. Vorzugsweise ist die Längsachse des Bürstenkopfes mit einem Winkel in einem Bereich von 0° bis 90° zu der Längsachse des Griffstückes angeordnet. Insbesondere beträgt der Winkel zwischen der Längsachse des Bürstenkopfes und der Längsachse des Griffstückes etwa 30°, etwa 45°, etwa 60° oder etwa 90°. Vorzugsweise ist der Durchmesser des Griffstückes geringer als der maximale Durchmesser des Bürstenkopfes. Insbesondere liegt der Durchmesser des Griffstückes im Bereich von 3,0 mm bis 4,0 mm, bevorzugt beträgt der Durchmesser des Griffstückes 3,45 mm. Die Länge des Griffstückes kann im Bereich von 10 mm bis 30 mm liegen. Insbesondere beträgt die Länge des Griffstückes 11 mm.

Nach einer weiteren Ausführungsform ist zwischen dem Bürstenkopf und dem Griffstück ein plastisch verformbares Ausrichtsegment zum manuellen Ausrichten des Bürstenkopfes in Relation zum Griffstück angeordnet. Hierdurch kann der Bürstenkopf in einer Vielzahl von unterschiedlichen Positionen zum Griffstück ausgerichtet, gebogen und/oder geknickt werden. Dadurch ist die Benutzung der Interdentalbürste in einem begrenzten Raum, wie beispielsweise innerhalb eines Mundes, erleichtert. Vorzugsweise ist eine Längsachse des Bürstenkopfes und/oder des Borstenträgers um mindestens bis zu 45°, insbesondere um mindestens bis zu 90°, aus der Längsachse des Griffstückes mittels des Ausrichtsegmentes heraus ausrichtbar und/oder biegbar. Somit kann die Längsachse des Bürstenkopfes und/oder des Borstenträgers zu der Längsachse des Griffstückes gebogen und/oder geknickt werden. Insbesondere stellt das Ausrichtsegment eine Knickstelle bereit.

Mittels der erfindungsgemäßen Interdentalbürste ist ein, insbesondere manuelles, Reinigen von Zahnzwischenräumen und/oder Zahnimplantaten erleichtert. Zugleich ist das Risiko einer Verletzung des Zahnfleisches und/oder des Zahnschmelzes sowie die Beschädigung eines Zahnimplantates erheblich reduziert.

Nachfolgend wird die Erfindung anhand der Figuren näher erläutert. Es zeigen:
- Fig. 1: eine perspektivische Seitenansicht einer erfindungsgemäßen Interdentalbürste,
- Fig. 2: eine perspektivische Seitenansicht eines Bürstenkopfes für die erfindungsgemäße Interdentalbürste gemäß Fig. 1,
- Fig. 3: eine Seitenansicht der erfindungsgemäßen Interdentalbürste gemäß Fig. 1 und 2,
- Fig. 4: eine Seitenansicht des Bürstenkopfes gemäß Fig. 2 und 3,
- Fig. 5: eine perspektivische Seitenansicht eines zweiten Bürstenkopfes für eine erfindungsgemäße Interdentalbürste,
- Fig. 6: eine perspektivische Seitenansicht eines weiteren Bürstenkopfes für eine erfindungsgemäße Interdentalbürste, und
- Fig. 7: eine Frontansicht einer einzelnen Borste.

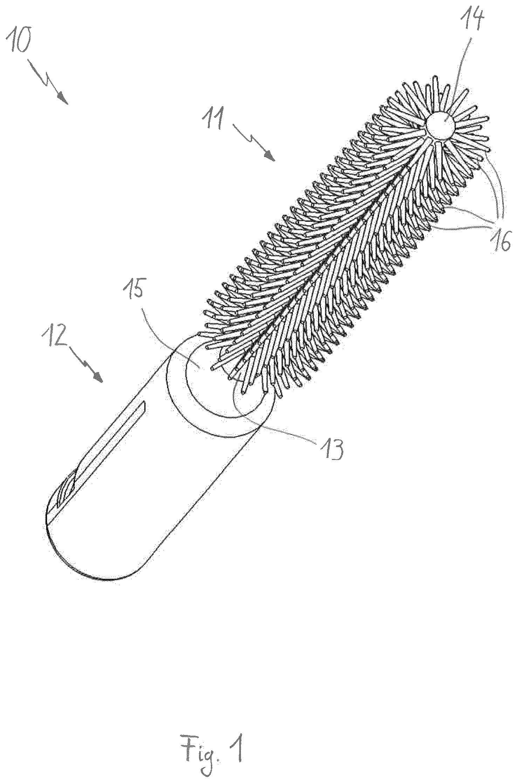

Fig. 1 zeigt eine perspektivische Seitenansicht einer erfindungsgemäßen Interdentalbürste 10. Die Interdentalbürste 10 weist einen Bürstenkopf 11 und ein Griffstück 12 auf. Der Bürstenkopf 11 hat einen länglichen Borstenträger 13, der im Wesentlichen stabförmig ausgebildet ist. Der Borstenträger 13 hat bei diesem Ausführungsbeispiel eine freiliegende Spitze 14. Des Weiteren ist die Spitze 14 bei diesem Ausführungsbeispiel halbkugelartig ausgebildet. In einer alternativen Ausführungsform können sich vom Außenumfang der halbkugelartigen Spitze 14 hier nicht näher dargestellte Borsten radial nach außen und von der halbkugelartigen Oberfläche der Spitze 14 weg erstrecken. Bei diesem Ausführungsbeispiel hat die halbkugelartige Spitze 14 einen maximalen Durchmesser bzw. der Borstenträger 13 einen minimalen Durchmesser von 0,9 mm. Ein von der Spitze 14 abgewandtes Ende des Borstenträgers 13 geht in das im Wesentlichen zylinderförmige Griffstück 12 über. Bei diesem Ausführungsbeispiel ist zwischen dem Bürstenkopf 11 und dem Griffstück 12 ein Ausrichtsegment 15 angeordnet.

Vom Außenumfang des länglichen Borstenträgers 13 erstrecken sich eine Vielzahl von Borsten 16 radial zur Längsachse des Borstenträgers 13 nach außen. Für eine bessere Übersichtlichkeit sind nicht alle Borsten 16 mit einem Bezugszeichen versehen. Bei diesem Ausführungsbeispiel hat ein mit den Borsten 16 bestückter Borstenbereich des Borstenträgers 13 eine Länge von 15 mm. Der Bürstenkopf 11, bestehend aus dem Borstenträger 13 und den Borsten 16, ist aus einem einzigen Kunststoffmaterial und als ein 1-Komponenten-Spritzgussteil ausgebildet. Der Borstenträger 13 und die Borsten 16 sind elastisch und flexibel. Das Griffstück 12 hat bei diesem Ausführungsbeispiel eine Länge, die kleiner ist als die Länge des Bürstenkopfes 11 bzw. des Borstenträgers 13.

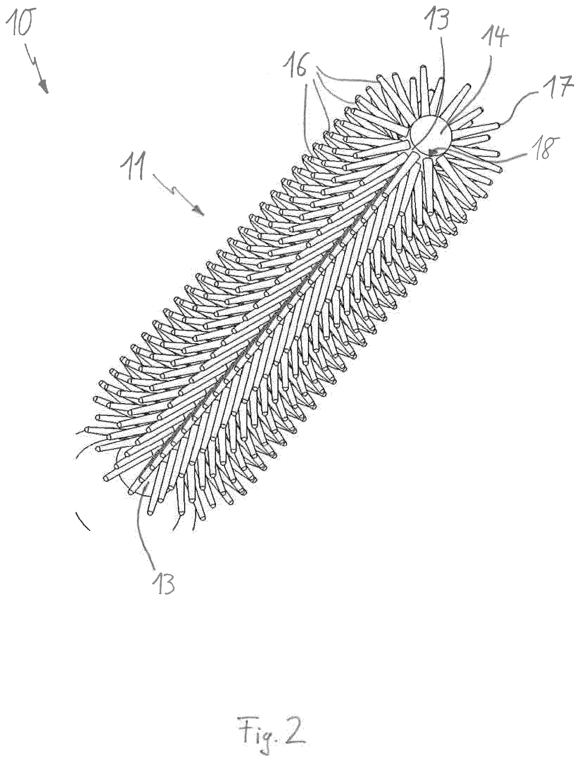

Fig. 2 zeigt eine perspektivische Seitenansicht des Bürstenkopfes 11 für die erfindungsgemäße Interdentalbürste 10 gemäß Fig. 1. Die Borsten 16 weisen eine nach außen konisch zulaufende Gestalt auf. Bei diesem Ausführungsbeispiel haben die Borsten 16 eine Borstenlänge von etwa 1 mm. Des Weiteren haben die Borsten 16 eine konische Gestalt. Die Borsten 16 haben jeweils eine Borstenspitze 17, die bei diesem Ausführungsbeispiel halbkugelartig ausgebildet ist. An dem von der freien Borstenspitze 17 abgewandten Ende haben die Borsten 16 jeweils einen Borstensockel 18. Der Borstensockel 18 ist einstückig mit dem Borstenträger 13 verbunden. Die Borsten 16 weisen im Bereich des Borstensockels 18 jeweils ihren maximalen Durchmesser auf, der bei diesem Ausführungsbeispiel 0,2 mm beträgt. Für eine bessere Übersichtlichkeit sind nicht alle Borstenspitzen 17 und Borstensockel 18 mit einem Bezugszeichen versehen.

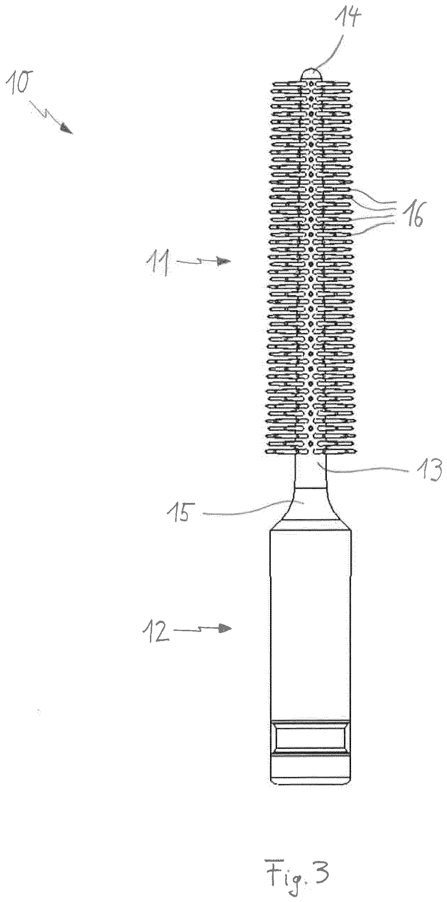

Fig. 3 zeigt eine Seitenansicht der erfindungsgemäßen Interdentalbürste 10 gemäß Fig. 1 und 2. Das hier gut zu erkennende Ausrichtsegment 15 stellt eine Knickstelle zur Verfügung, um bei Bedarf den Bürstenkopf 11 um bis zu 90° in Bezug zur Längsachse des Griffstücks 12 zu biegen. Ausgehend von dem Ausrichtsegment 15 bzw. dem Griffstück 12 verjüngt sich der längliche Borstenträger 13 in Richtung der Spitze 14. Bei diesem Ausführungsbeispiel ist der Borstenträger 13 leicht konisch ausgebildet.

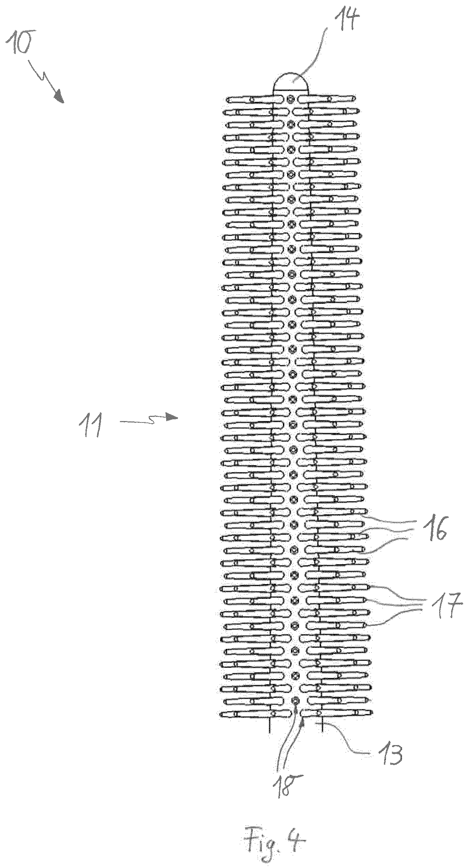

Fig. 4 zeigt eine Seitenansicht des Bürstenkopfes 11 gemäß der vorhergehenden Figuren. Die Borsten 16 sind in mehreren Ebenen entlang der Längsachse des länglichen Borstenträgers 13 angeordnet. Hierbei sind die Ebenen der Borsten 16 jeweils rechtwinkelig zur Längsachse des Borstenträgers 13 und parallel zueinander ausgerichtet. Bei diesem Ausführungsbeispiel sind insgesamt 50 Ebenen von Borsten 16 in Längsrichtung des Borstenträgers 13 aufeinander folgend angeordnet.

Des Weiteren sind bei diesem Ausführungsbeispiel in jeweils einer Ebene rechtwinkelig zur Längsachse des Borstenträgers 13 zehn Borsten 16 gleichmäßig voneinander beabstandet. Die Winkeldifferenz zwischen zwei unmittelbar benachbarter Borsten 16 in der selben Ebene rechtwinkelig zur Längsachse des Borstenträgers 13 beträgt bei diesem Ausführungsbeispiel 36°. Somit sind bei diesem Ausführungsbeispiel insgesamt 500 Borsten an dem Borstenträger 13 angeordnet.

Darüber hinaus ist erkennbar, dass jeweils zwei in Richtung der Längsachse des Borstenträgers 13 unmittelbar nacheinander folgende und rechtwinkelig zur Längsachse des Borstenträgers 13 ausgerichtete Ebenen mit Borsten 16 um eine halbe Winkeldifferenz zwischen zwei unmittelbar benachbarten Borsten 16 in der selben Ebene versetzt sind.

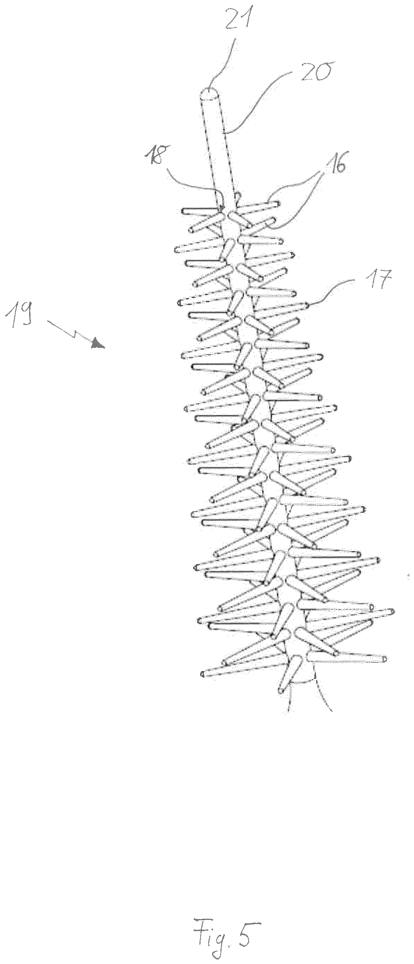

Fig. 5 zeigt eine perspektivische Seitenansicht eines zweiten Bürstenkopfes 19 für eine erfindungsgemäße Interdentalbürste. Der zweite Bürstenkopf 19 kann anstelle des Bürstenkopfes 11 gemäß den Figuren 1 bis 4 vorgesehen sein.

Wie auch der Bürstenkopf 11 gemäß den Figuren 1 bis 4 hat auch der zweite Bürstenkopf 19 einen länglichen Borstenträger 20, der im Wesentlichen stabförmig ausgebildet ist und eine freiliegende Spitze 21 hat. Des Weiteren ist die Spitze 21 bei diesem Ausführungsbeispiel halbkugelartig ausgebildet. In einer alternativen Ausführungsform können sich vom Außenumfang der halbkugelartigen Spitze 21 hier nicht näher dargestellte Borsten radial nach außen und von der halbkugelartigen Oberfläche der Spitze 21 weg erstrecken. Bei diesem Ausführungsbeispiel hat die halbkugelartige Spitze 21 einen maximalen Durchmesser bzw. der Borstenträger 20 einen minimalen Durchmesser von 0,4 mm. Ein von der Spitze 21 abgewandtes Ende des Borstenträgers 20 ist mit dem hier nicht näher dargestellten Griffstück 12 verbunden. Der Borstenträger 20 hat an seinem dem Griffstück 12 zugewandten Ende einen maximalen Durchmesser von 0,6 mm. Somit hat der Borstenträger 20 eine konische, sich zur Spitze 21 hin verjüngende Gestalt.

Vom Außenumfang des länglichen Borstenträgers 20 erstrecken sich eine Vielzahl von Borsten 16 radial zur Längsachse des Borstenträgers 20 nach außen. Für eine bessere Übersichtlichkeit sind nicht alle Borsten 16 mit einem Bezugszeichen versehen. Bei diesem Ausführungsbeispiel hat der Borstenträger 20 eine Länge von 16,4 mm, wobei hier beispielhaft ein Abschnitt im Bereich der Spitze 21 unbeborstet verbleibt. Der Bürstenkopf 19, bestehend aus dem Borstenträger 20 und den Borsten 16, ist aus einem einzigen Kunststoffmaterial und als ein 1-Komponenten-Spritzgussteil ausgebildet.

Bei diesem Ausführungsbeispiel haben die Borsten 16 im Bereich des dem Griffstück 12 zugewandten Endes eine maximale Borstenlänge von etwa 2 mm und im Bereich des der Spitze 21 zugewandten Endes eine minimale Borstenlänge von 1 mm. Die Borstenlänge reduziert sich in Richtung der Spitze kontinuierlich, so dass sich eine im Wesentlichen konische Umhüllende um die Borstenspitzen 17 ergibt.

Bei diesem Ausführungsbeispiel sind die Borsten 16 in insgesamt 18 Ebenen in Längsrichtung des Borstenträgers 20 aufeinander folgend angeordnet. Des Weiteren sind bei diesem Ausführungsbeispiel in jeweils einer Ebene rechtwinkelig zur Längsachse des Borstenträgers 20 fünf Borsten 16 gleichmäßig voneinander beabstandet. Die Winkeldifferenz zwischen zwei unmittelbar benachbarter Borsten 16 in der selben Ebene rechtwinkelig zur Längsachse des Borstenträgers 20 beträgt bei diesem Ausführungsbeispiel 72°. Somit sind bei diesem Ausführungsbeispiel insgesamt 90 Borsten an dem Borstenträger 20 angeordnet.

Darüber hinaus ist erkennbar, dass jeweils zwei in Richtung der Längsachse des Borstenträgers 20 unmittelbar nacheinander folgende und rechtwinkelig zur Längsachse des Borstenträgers 20 ausgerichtete Ebenen mit Borsten 16 um eine halbe Winkeldifferenz, hier beispielhaft um 36°, zu der Ausrichtung von Borsten 16 in einer benachbarten Ebene versetzt sind.

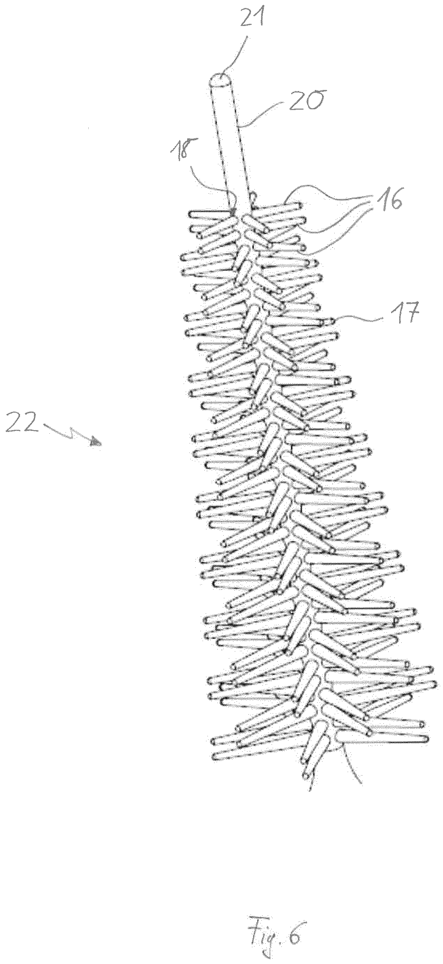

Fig. 6 zeigt eine perspektivische Seitenansicht eines weiteren Bürstenkopfes 22 für eine erfindungsgemäße Interdentalbürste. Der weitere Bürstenkopf 22 kann anstelle des Bürstenkopfes 11 gemäß den Figuren 1 bis 4 vorgesehen sein. Bezüglich gleicher Merkmale wie zuvor wird auf die vorangegangene Beschreibung verwiesen.

Der weitere Bürstenkopf 22 entspricht weitgehend dem zweiten Bürstenkopf 19 gemäß Figur 5, jedoch weist der weitere Bürstenkopf 22 doppelt so viele, nämlich 180 Borsten 16 auf. Jeweils zwei unmittelbar benachbarte Ebenen von Borsten 16 bilden ein Ebenenpaar, bei dem die Borsten 16 der beiden einzelnen Ebenen gleichartig an dem Borstenträger 20 angeordnet sind. Somit sind insgesamt 18 Ebenenpaare von Borsten 16 und insgesamt 36 einzelne Ebenen von Borsten 16 vorhanden.

Jeweils zwei in Richtung der Längsachse des Borstenträgers 20 unmittelbar nacheinander folgende und rechtwinkelig zur Längsachse des Borstenträgers 20 ausgerichtete Ebenenpaare mit Borsten 16 sind um eine halbe Winkeldifferenz, hier besipielhaft um 36°, zu der Ausrichtung der Borsten 16 in Bezug zum Borstenträger 20 eines benachbarten Ebenenpaares versetzt.

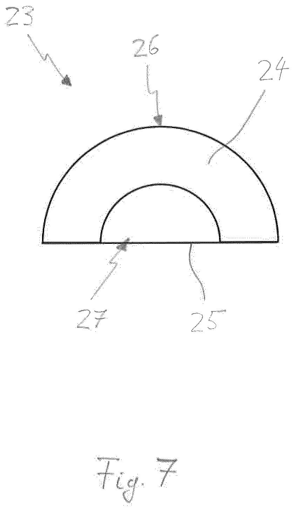

Fig. 7 zeigt eine Frontansicht einer einzelnen Borste 23. Im Unterschied zu einer Borste 16 gemäß den Figuren 1 bis 6, die als eine ganze Borste angesehen werden kann, ist die Borste 23 als eine halbe Borste 16 ausgebildet.

Die Borste 23 hat einen halbkreisartigen bzw. halbmondartigen Querschnitt. Hierbei weist die Borste 23 einen im Querschnitt halbkreisartigen ersten Wandabschnitt 24 und einen flächigen, vorzugsweise ebenen, zweiten Wandabschnitt 25 auf. Somit stellt die Borste 23 eine in Längsrichtung geschnittene Borste 16 dar. Die Borste 23 kann anstelle der Borste 16 oder wechselweise mit der Borste 16 eingesetzt werden. Ausgehend von einem Borstensockel 26 verjüngt sich die Borste 23 in Richtung einer Borstenspitze 27.

### Bezugszeichenliste:

- 10: Interdentalbürste
- 11: Bürstenkopf
- 12: Griffstück
- 13: Borstenträger
- 14: Spitze
- 15: Ausrichtsegment
- 16: Borsten
- 17: Borstenspitze
- 18: Borstensockel
- 19: Bürstenkopf
- 20: Borstenträger
- 21: Spitze
- 22: Bürstenkopf
- 23: Borste
- 24: erster Wandabschnitt
- 25: zweiter Wandabschnitt
- 26: Borstensockel
- 27: Borstenspitze

## Patentansprüche

1. Interdentalbürste zum Reinigen von Zahnzwischenräumen und/oder Zahnimplantaten, mit einem Bürstenkopf (11, 19, 22), der einen länglichen Borstenträger (13, 20) und eine Vielzahl von Borsten (16, 23) aufweist, wobei sich die Borsten (16, 23) ausgehend von dem Borstenträger (13, 20) radial nach außen erstrecken, **dadurch gekennzeichnet, dass** der Bürstenkopf (11, 19, 22) als ein 1-Komponenten-Spritzgussteil ausgebildet ist.

2. Interdentalbürste nach Anspruch 1, **dadurch gekennzeichnet, dass** der Bürstenkopf (11, 19, 22) mit dem Borstenträger (13, 20) und den Borsten (16, 23) aus einem einzigen zum Kunststoff-Spritzgussgießen geeigneten Kunststoffmaterial hergestellt ist, wobei vorzugsweise der Bürstenkopf (11, 19, 22), der Borstenträger (13, 20) und/oder die Borsten (16, 23) elastisch sind.

3. Interdentalbürste nach Anspruch 1 oder 2, **dadurch gekennzeichnet, dass** unmittelbar benachbarte Borsten (16, 23), insbesondere in einer Ebene rechtwinklig zur Längsachse des Borstenträgers (13, 20), mit einer Winkeldifferenz von weniger als 90°, insbesondere weniger als 60°, vorzugsweise weniger als 45°, bevorzugt weniger als 30°, an dem Borstenträger (13, 20) angeordnet sind, besonders bevorzugt beträgt die Winkeldifferenz zwischen 30° und 40°, insbesondere beträgt die Winkeldifferenz 36° oder 72°.

4. Interdentalbürste nach einem der vorhergehenden Ansprüche, **dadurch gekennzeichnet, dass** die Borsten (16, 23) eine Borstenlänge im Bereich von 1 mm bis 2,5 mm, insbesondere von 1 mm, 1,95 mm oder 2 mm, aufweisen, vorzugsweise verjüngen sich die Borsten (16, 23), insbesondere konisch, von dem Borstenträger (13, 20) weg in Richtung einer Borstenspitze (17, 27), wobei insbesondere die Borstenspitze (17, 27) abgerundet ausgebildet ist.

5. Interdentalbürste nach einem der vorhergehenden Ansprüche, **dadurch gekennzeichnet, dass** die Borsten (16, 23) einen kreisförmigen oder halbkreisartigen, insbesondere halbmondartigen, Querschnitt aufweisen, insbesondere haben die Borsten (23) jeweils einen im Querschnitt gebogenen und/oder halbkreisartigen ersten Wandabschnitt (24) und einen flächigen, vorzugsweise ebenen, zweiten Wandabschnitt (25).

6. Interdentalbürste nach einem der vorhergehenden Ansprüche, **dadurch gekennzeichnet, dass** die Borsten (16. 23) einen maximalen Durchmesser im Bereich von 0,1 mm bis 0,25 mm, vorzugsweise von 0,1 mm oder 0,2 mm, haben, wobei vorzugsweise der maximale Durchmesser der Borsten (16, 23) einem, insbesondere von einer Borstenspitze (17, 27) abgewandten, mit dem Borstenträger (13, 20) verbundenen Borstensockel (18, 26) zugeordnet ist.

7. Interdentalbürste nach einem der vorhergehenden Ansprüche, **dadurch gekennzeichnet, dass** der Borstenträger (13, 20) und/oder ein mit den Borsten (16, 23) bestückter Borstenbereich des Borstenträgers (13, 20) eine Länge im Bereich von 5 mm bis 35 mm, insbesondere von 12 mm bis 20 mm, vorzugsweise von 15 mm, 16,4 mm oder 20 mm, hat, wobei vorzugsweise der, insbesondere zylindrische oder konische, Borstenträger (13, 20) einen Durchmesser im Bereich von 0,5 mm bis 1,5 mm, bevorzugt im Bereich von 0,7 mm bis 0,9 mm, hat.

8. Interdentalbürste nach einem der vorhergehenden Ansprüche, **dadurch gekennzeichnet, dass** der Borstenträger (13, 20) eine konische Gestalt aufweist, wobei sich der Borstenträger (13, 20) von einem an einem Griffstück (12) angeordneten Ende in Richtung einer Spitze (14, 21) des Borstenträger (13, 20) verjüngt, insbesondere hat der Borstenträger (13, 20) einen maximalen Durchmesser im Bereich von 0,5 mm bis 2 mm, bevorzugt im Bereich von 0,6 mm bis 1,4 mm, besonders bevorzugt hat der Borstenträger (13, 20) einen maximalen Durchmesser von 0,6 mm oder 1,4 mm, vorzugsweise hat der Borstenträger (13, 20) einen minimalen Durchmesser im Bereich von 0,2 mm bis 1 mm, bevorzugt im Bereich von 0,4 mm bis 0,9 mm, besonders bevorzugt hat der Borstenträger (13, 20) einen minimalen Durchmesser von 0,4 mm oder 0,9 mm.

9. Interdentalbürste nach einem der vorhergehenden Ansprüche, **dadurch gekennzeichnet, dass** die Anzahl der Borsten (16, 23) an dem Borstenträger (13, 20) im Bereich von 150 bis 1000 Borsten (16, 23), vorzugsweise im Bereich von 200 bis 1000 Borsten (16, 23), insbesondere im Bereich von 300 bis 840 Borsten (16, 23), vorzugsweise bei 180 oder 500 Borsten (16, 23), liegt.

10. Interdentalbürste nach einem der vorhergehenden Ansprüche, **dadurch gekennzeichnet, dass** ein Fließweg/Wanddicken-Verhältnis für den Bürstenkopf (11, 19, 22) größer als 20, insbesondere größer als 30, ist, vorzugsweise liegt das Fließweg/Wanddicken-Verhältnis in einem Bereich von 20 bis 60 oder in einem Bereich von 30 bis 50, bevorzugt hat das Fließweg/Wanddicken-Verhältnis einen Wert im Bereich von 20 bis 30 oder im Bereich von 35 bis 45.

11. Interdentalbürste nach einem der vorhergehenden Ansprüche, **dadurch gekennzeichnet, dass** ein mit dem Bürstenkopf (11, 19, 22) verbundenes Griffstück (12) vorgesehen ist, insbesondere sind der Bürstenkopf (11, 19, 22) und das Griffstück (12) als ein 1-Komponenten-Spritzgussteil oder als ein 2-Komponenten-Spritzgussteil ausgebildet, wobei vorzugsweise bei einem 2-Komponenten-Spritzgussteil das Griffstück (12) aus einem anderem Kunststoffmaterial hergestellt ist als der Bürstenkopf (11, 19, 22).

12. Interdentalbürste nach Anspruch 11, **dadurch gekennzeichnet, dass** zwischen dem Bürstenkopf (11, 19, 22) und dem Griffstück (12) ein plastisch verformbares Ausrichtsegment (15) zum manuellen Ausrichten des Bürstenkopfes (11, 19, 22) in Relation zum Griffstück (12) angeordnet ist, wobei vorzugsweise eine Längsachse des Bürstenkopfes (11, 19, 22) und/oder des Borstenträgers (13, 20) um mindestens bis zu 45°, insbesondere um mindestens bis zu 90°, aus der Längsachse des Griffstückes (12) mittels des Ausrichtsegmentes (15) heraus ausrichtbar und/oder biegbar ist.

## Claims

1. Interdental brush for cleaning interdental spaces and/or dental implants, having a brush head (11, 19, 22) that has an elongated bristle carrier (13, 20) and a plurality of bristles (16, 23), wherein the bristles (16, 23) extend radially outwards starting from the bristle carrier (13, 20), **characterised in that** the brush head (11, 19, 22) is designed as a single component injection-moulded part

2. Interdental brush according to claim 1, **characterised in that** the brush head (11, 19, 22) is produced with the bristle carrier (13, 20) and the bristles (16, 23) from a single plastic material suitable for plastic injection moulding, wherein preferably the brush head (11, 19, 22), the bristle carrier (13, 20) and/or the bristles (16, 23) are elastic.

3. Interdental brush according to claim 1 or 2, **characterised in that** directly adjacent bristles (16, 23), are arranged in particular in a plane perpendicular to the longitudinal axis of the bristle carrier (13, 20), at an angle difference of less than 90°, in particular less than 60°, preferably less than 45°, preferably less than 30°, on the bristle carrier (13, 20), particularly preferably the angle difference is between 30° and 40°, in particular the angle difference is 36° or 72°.

4. Interdental brush according to one of the preceding claims, **characterised in that** the bristles (16, 23) have a bristle length in the range of 1 mm to 2.5 mm, in particular of 1 mm, 1.95 mm or 2 mm, preferably the bristles (16, 23) taper, in particular conically, away from the bristle carrier (13, 20) in the direction of a bristle tip (17, 27), wherein in particular the bristle tip (17, 27) is rounded.

5. Interdental brush according to one of the preceding claims, **characterised in that** the bristles (16, 23) have a circular or semi-circular, in particular crescent-like cross-section, in particular the bristles (23) each have a first wall section (24) bent and/or semi-circular in cross section and a flat, preferably planar, second wall section (25).

6. Interdental brush according to one of the preceding claims, **characterised in that** the bristles (16, 23) have a maximum diameter in the range of 0.1 mm to 0.25 mm, preferably of 0.1 mm or 0.2 mm, wherein preferably the maximum diameter of the bristles (16, 23) is associated with a bristle base (18, 26), in particular facing away from a bristle tip (17, 27) and connected to the bristle carrier (13, 20).

7. Interdental brush according to one of the preceding claims, **characterised in that** the bristle carrier (13, 20) and/or a bristle region of the bristle carrier (13,20) equipped with the bristles (16, 23) has a length in the range of 5 mm to 35 mm, in particular from 12 mm to 20 mm, preferably of 15 mm, 16.4 mm or 20 mm, wherein preferably the, in particular cylindrical or conical, bristle carrier (13, 20) has a diameter in the range of 0.5 mm to 1.5 mm, preferably in the range from 0.7 mm to 0.9 mm.

8. Interdental brush according to one of the preceding claims, **characterised in that** the bristle carrier (13, 20) has a conical shape, wherein the bristle carrier (13, 20) tapers from an end arranged on a handle piece (12) in the direction of a tip (14, 21) of the bristle carrier (13, 20), in particular the bristle carrier (13, 20) has a maximum diameter in the range from 0.5 mm to 2 mm, preferably in the range from 0.6 mm to 1.4 mm, more preferably the bristle carrier (13, 20) has a maximum diameter of 0.6 mm or 1.4 mm, preferably the bristle carrier (13, 20) has a minimum diameter in the range of 0.2 mm to 1 mm, preferably in the range of 0.4 mm to 0.9 mm, more preferably the bristle carrier (13, 20) has a minimum diameter of 0.4 mm or 0.9 mm.

9. Interdental brush according to one of the preceding claims, **characterised in that** the number of bristles (16, 23) on the bristle carrier (13, 20) is in the range from 150 to 1000 bristles (16, 23), preferably in the range from 200 to 1000 bristles (16, 23), in particular in the range from 300 to 840 bristles (16, 23), preferably at 180 or 500 bristles (16, 23).

10. Interdental brush according to one of the preceding claims, **characterised in that** a flow path/wall thickness ratio for the brush head (11, 19, 22) is greater than 20, in particular greater than 30, preferably the flow path/wall thickness ratio is in a range from 20 to 60 or in a range from 30 to 50, preferably the flow path/wall thickness ratio has a value in the range from 20 to 30 or in the range from 35 to 45.

11. Interdental brush according to one of the preceding claims, **characterised in that** a handle piece (12) connected to the brush head (1, 19, 22) is provided, in particular the brush head (11, 19, 22) and the handle piece (12) are designed as a single component injection-moulded part or as a two component injection-moulded part, wherein preferably in the case of a two component injection-moulded part the handle piece (12) is produced from another plastic material than is the brush head (11, 19, 22).

12. Interdental brush according to Claim 11, **characterised in that** a plastically deformable alignment segment (15) for manually aligning the brush head (11, 19, 22) in relation to the handle piece (12) is arranged between the brush head (11, 19, 22) and the handle piece (12), wherein preferably a longitudinal axis of the brush head (11, 19, 22) and/or of the bristle carrier (13, 20) can be aligned and/or bent out of the longitudinal axis of the handle piece (12) by at least up to 45°, in particular by at least up to 90° by means of the alignment segment (15).

## Revendications

1. Brosse interdentaire pour le nettoyage des espaces interdentaires et/ou des implants dentaires, avec une tête de brosse (11, 19, 22) qui comprend un support de poils allongé (13, 20) et une pluralité de poils (16, 23), les poils (16, 23) s'étendant radialement vers l'extérieur à partir du support de poils (13, 20), **caractérisée en ce que** la tête de brosse (11, 19, 22) est conçue comme une pièce moulée par injection à un composant.

2. Brosse interdentaire selon la revendication 1, **caractérisée en ce que** la tête de brosse (11, 19, 22) avec le support de poils (13, 20) et les poils (16, 23) est fabriquée à partir d'un seul matériau plastique adapté au moulage par injection de plastique, la tête de brosse (11, 19, 22), le support de poils (13, 20) et/ou les poils (16, 23) étant de préférence élastiques.

3. Brosse interdentaire selon la revendication 1 ou 2, **caractérisée en ce que** des poils (16, 23) directement voisins, en particulier dans un plan perpendiculaire à l'axe longitudinal du support de poils (13, 20), sont disposés avec une différence angulaire de moins de 90°, en particulier de moins de 60°, de préférence moins de 45°, de préférence moins de 30°, sur le support de poils (13, 20), de préférence encore la différence angulaire est comprise entre 30° et 40°, en particulier la différence angulaire est de 36° ou 72°.

4. Brosse interdentaire selon l'une quelconque des revendications précédentes, **caractérisée en ce que** les poils (16, 23) ont une longueur comprise dans la plage allant de 1 mm à 2,5 mm, en particulier de 1 mm, 1,95 mm ou 2 mm, les poils (16, 23) s'effilant, en particulier de manière conique, à partir du support de poils (13, 20) en direction d'une pointe de poils (17, 27), la pointe de poils (17, 27) étant en particulier arrondie.

5. Brosse interdentaire selon l'une quelconque des revendications précédentes, **caractérisée en ce que** les poils (16, 23) présentent une section transversale circulaire ou semi-circulaire, en particulier en forme de demi-lune, en particulier les poils (23) ont chacun une première section de paroi (24) courbée en section transversale et/ou semi-circulaire et une deuxième section de paroi (25) plate, de préférence plane.

6. Brosse interdentaire selon l'une quelconque des revendications précédentes, **caractérisée en ce que** les poils (16, 23) ont un diamètre maximal compris dans la plage de 0,1 mm à 0,25 mm, de préférence de 0,1 mm ou 0,2 mm, de préférence le diamètre maximal des poils (16, 23) est associé à une base de poils (18, 26), en particulier éloignée d'une pointe de poils (17, 27), reliée au support de poils (13, 20).

7. Brosse interdentaire selon l'une quelconque des revendications précédentes, **caractérisée en ce que** le support de poils (13, 20) et/ou une zone de poils du support de poils (13, 20) comportant les poils (16, 23) a/ont une longueur dans la plage de 5 mm à 35 mm, en particulier de 12 mm à 20 mm, de préférence de 15 mm, 16,4 mm ou 20 mm, le support de poils (13, 20), en particulier cylindrique ou conique, ayant de préférence un diamètre dans la plage de 0,5 mm à 1,5 mm, de préférence dans la plage de 0,7 mm à 0,9 mm.

8. Brosse interdentaire selon l'une quelconque des revendications précédentes, **caractérisée en ce que** le support de poils (13, 20) présente une forme conique, le support de poils (13, 20) se rétrécissant à partir d'une extrémité disposée sur un manche (12) en direction d'une pointe (14, 21) du support de poils (13, 20), en particulier le support de poils (13, 20) affiche un diamètre maximal dans la plage allant de 0,5 mm à 2 mm, de préférence dans la plage de 0,6 mm à 1,4 mm, de manière particulièrement préférée le support de poils (13, 20) a un diamètre maximal de 0,6 mm ou 1,4 mm, de préférence le support de poils (13, 20) a un diamètre minimal dans la plage de 0,2 mm à 1 mm, de préférence dans la plage de 0,4 mm à 0,9 mm, de manière particulièrement préférée le support de poils (13, 20) a un diamètre minimal de 0,4 mm ou 0,9 mm.

9. Brosse interdentaire selon l'une quelconque des revendications précédentes, **caractérisée en ce que** le nombre de poils (16, 23) sur le support de poils (13, 20) se situe dans la plage de 150 à 1 000 poils (16, 23), de préférence dans la plage de 200 à 1 000 poils (16, 23), en particulier dans la plage de 300 à 840 poils (16, 23), de préférence à 180 ou 500 poils (16, 23).

10. Brosse interdentaire selon l'une quelconque des revendications précédentes, **caractérisée en ce qu'**un rapport trajet d'écoulement/épaisseur de paroi pour la tête de brosse (11, 19, 22) est supérieur à 20, en particulier supérieur à 30, de préférence le rapport trajet d'écoulement/épaisseur de paroi se situe dans une plage de 20 à 60 ou dans une plage de 30 à 50, de préférence le rapport trajet d'écoulement/épaisseur de paroi a une valeur située dans la plage de 20 à 30 ou dans la plage de 35 à 45.

11. Brosse interdentaire selon l'une quelconque des revendications précédentes, **caractérisée en ce qu'**un manche (12) relié à la tête de brosse (11, 19, 22) est prévu, en particulier la tête de brosse (11, 19, 22) et le manche (12) sont fabriqués sous la forme d'une pièce moulée par injection à un composant ou d'une pièce moulée par injection à deux composants, de préférence dans le cas d'une pièce moulée par injection à deux composants, le manche (12) est fabriqué dans un matériau plastique différent de celui de la tête de brosse (11, 19, 22).

12. Brosse interdentaire selon la revendication 11, **caractérisée en ce qu'**entre la tête de brosse (11, 19, 22) et le manche (12) est disposé un segment d'alignement (15) déformable plastiquement pour l'alignement manuel de la tête de brosse (11, 19, 22) par rapport au manche (12), un axe longitudinal de la tête de brosse (11, 19, 22) et/ou du support de poils (13, 20) peut de préférence être orienté et/ou plié d'au moins jusqu'à 45°, en particulier d'au moins jusqu'à 90°, par rapport à l'axe longitudinal du manche (12) au moyen du segment d'alignement (15)
